# EUROPÄISCHE PATENTSCHRIFT

(11) **EP 1 417 111 B1**
(45) Veröffentlichungstag und Bekanntmachung des Hinweises auf die Patenterteilung: **13.02.2008**
(21) Anmeldenummer: 02754484.0
(22) Anmeldetag: 01.08.2002
(51) Int. Cl.: B60K 35/00, G01D 7/04

(54) **ANZEIGEEINHEIT**
DISPLAY UNIT
UNITE D'AFFICHAGE

(30) Priorität: 15.08.2001 DE 10138849; 12.09.2001 DE 10144983
(43) Veröffentlichungstag der Anmeldung: 12.05.2004
(73) Patentinhaber: Siemens VDO Automotive AG, 93055 Regensburg (DE)
(72) Erfinder: NOLL, Heinrich, 64823 Gross-Umstadt (DE); ABEL, Heinz-Bernhard, 63762 Grossostheim (DE)
(86) Internationale Anmeldenummer: PCT/DE2002/002846
(87) Internationale Veröffentlichungsnummer: WO 2003/016086

(56) Entgegenhaltungen:
- DE-A- 4 407 855
- DE-A- 19 509 450
- DE-A- 19 757 545
- FR-A- 2 761 029

## Beschreibung

Die Erfindung betrifft eine Anzeigeeinheit, insbesondere für ein Kraftfahrzeug, welche eine erste analoge Anzeige mit einem Zifferblatt und einem Zeiger und eine zweite digitale Anzeige aufweist, die bei einer entsprechenden Ansteuerung für den Betrachter von demselben Blickpunkt aus wie das Zifferblatt sichtbar ist, die vor der Ebene des Zifferblattes und parallel zu diesem auf der dem Betrachter zugewandten Seite angeordnet ist.

Anzeigeeinheiten der vorstehenden Art sind beispielsweise bei Kraftfahrzeugen als Bi-Vision-Kombiinstrumente bekannt und erlauben die Einspiegelung von Informationen in der Anzeigeebene der analogen Anzeigen. Das geschieht bei den bekannten Anzeigeeinheiten durch Anordnung eines schräg von der ersten Anzeige auf der Seite des Betrachters angeordneten Strahlteilers. Zusätzlich ist eine Einfärbung des Deckglases der jeweiligen Anzeigeeinheit oder des Strahlteilers erforderlich, damit jeweils nur die Informationen der jeweils gewünschten Anzeige sichtbar werden (Black Panel Effekt). Die Notwendigkeit des schräg gestellten Strahlteilers führt zu einem unerwünscht großen Bauvolumen und bedingt für die Beleuchtung beider Anzeigen hohen technischen Aufwand. Die Einfärbung des Deckglases oder des Strahlteilers bedingt große Lichtstärken und führt zu einer nachteiligen Wärmeentwicklung.

Aus den deutschen Offenlegungsschriften DE 44 07 855 Al und DE 197 57 545 Al sind gattungsgemäße Anzeigevorrichtungen mit Bi-Visions-Funktionen bekannt. Der Bi-Visions-Effekt wird bei diesen Anzeigeeinheiten mittels einer hintergrundbeleuchteten Flüssigkristallzelle erreicht. Es hat sich bei diesen Anzeigeeinheiten als besonderer Nachteil erwiesen, dass der niedrige Transmissionsgrad der Flüssigkristallzelle die Sicht auf das dahinterliegende Zeigerinstrument sehr stark beeinträchtigt. Des weiteren erfordert die Ablesbarkeit der mittels der Flüssigkristallzelle erzeugten Anzeige eine kostenträchtige, sehr leistungsstarke Hinterleuchtung der gesamten Anordnung.

Eine Anzeigeeinheit mit den Merkmalen des Oberbegriffs des Anspruchs 1 ist bekannt aus DE-10026 136.

Der Erfindung liegt das Problem zugrunde, eine Anzeigeeinheit der eingangs genannten Art so auszubilden, dass sie besonders kompakt aufgebaut ist und kostengünstig hergestellt werden kann.

Dieses Problem wird erfindungsgemäß dadurch gelöst, dass die zweite Anzeige ein Polymer aufweist, dass sie unmittelbar vor dem Zifferblatt angeordnet ist, dass der Zeiger aus einem transparenten, organisch Licht emittierenden Material besteht und sich vor der zweiten Anzeige befindet.

Bei einer solchen Anzeigeeinheit ist das zweite Display im nicht angesteuerten Zustand durchsichtig, so dass das Zifferblatt und der Zeiger der ersten Anzeige unbehindert betrachtet werden können. Wird die zweite Anzeige angesteuert, so wird diese in den angesteuerten Bereichen undurchsichtig, so dass dann in diesen Bereichen nur noch diese zweite Anzeige zu sehen ist. Da die zweite Anzeige im Gegensatz zu dem Strahlteiler bei den bekannten, vergleichbaren Anzeigeeinheiten parallel zu der Ebene der ersten Anzeige angeordnet ist, wird die Bautiefe der erfindungsgemäßen Anzeigeeinheit wesentlich geringer. Je nach Gestaltung des Zifferblattes und des Deckglases ermöglicht es die Erfindung, die Anzeigeeinheit mit einem Black Panel Effekt oder ohne einen solchen auszubilden.

Vorteilhaft ist es, wenn das Display als Display mit Negativdarstellung ausgebildet ist, weil dann zwangsläufig bei Ansteuerung dieses Displays das dahinter angeordnete Zifferblatt unsichtbar wird.

Gemäß der Erfindung weist die zweite Anzeige eine organisch Licht emittierende Substanz auf. Solche Displays mit organischen Substanzen haben gegenüber anorganisch emittierenden Anzeigen den Vorteil eines geringen Energieverbrauchs bei hoher Lichtstärke.

Derzeit sind organische, lichtemittierende Substanzen in Form von Monomeren und Polymeren bekannt. Für die Anwendung in Anzeigeeinheiten für Kraftfahrzeuge besonders vorteilhaft und kostengünstig ist es, dass die zweite Anzeige ein Polymer aufweist.

Konstruktiv besonders einfach ist die Anzeigeeinheit gestaltet, wenn die zweite Anzeige vom Betrachter aus gesehen vor dem Zeiger angeordnet ist und zugleich das Deckglas bildet. Eine solche Ausgestaltung eignet sich besonders für die wahlweise Ausstattung eines Kombiinstrumentes mit oder ohne eine zweite Anzeige. Weiterhin wird das Deckglas eingespart.

Für die Massenproduktion von Anzeigeeinheiten mit einer analogen ersten und einer digitalen zweiten Anzeige ist es aus Kostengründen besonders günstig, dass gemäß der Erfindung die zweite Anzeige unmittelbar vor dem Zifferblatt angeordnet ist und daß der Zeiger aus einem transparenten, organisch Licht emittierenden Material besteht und sich vor der zweiten Anzeige befindet.

Die Beleuchtung des Zifferblattes ist besonders wirkungsvoll und einfach gestaltet, wenn die Grafik des Zifferblattes transluzent ist und hinter dem Zifferblatt eine Durchlichtbeleuchtung angeordnet ist.

Eine besonders gleichmäßige und energiesparende Beleuchtung des Zifferblattes ergibt sich, wenn die Durchlichtbeleuchtung durch ein flächiges, organisch lichtemittierendes Bauteil gebildet ist.

Ein Black Panel Effekt lässt sich auf einfache Weise erreichen, wenn das transluzente Zifferblatt dunkel eingefärbt ist. Hierdurch wird das Zifferblatt bei nicht angesteuerter zweiter Anzeige auch dann unsichtbar, wenn das Deckglas nur schwach eingefärbt ist.

Die Erfindung ermöglicht es auch, besondere gestalterische Wünsche beim Design von Anzeigeeinheiten zu berücksichtigen. Hierzu kann man insbesondere vorsehen, dass die zweite Anzeige das Zifferblatt lediglich partiell überdeckt.

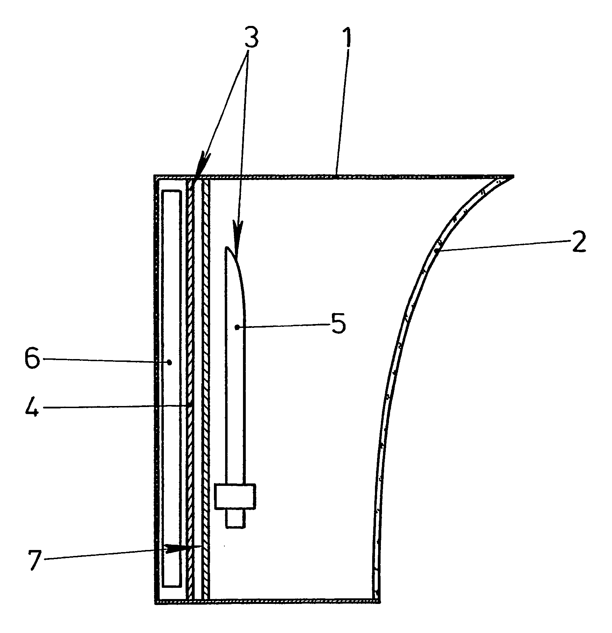

Die Erfindung lässt verschiedene Ausführungsformen zu. Zur weiteren Verdeutlichung ihres Grundprinzips ist eine davon schematisch in der Zeichnung dargestellt und wird nachfolgend beschrieben. Diese zeigt einen Längsschnitt durch eine erfindungsgemäße Anzeigeeinheit.

Die dargestellte Anzeigeeinheit hat ein Gehäuse 1, welches auf seiner dem Betrachter zugewandten Vorderseite von einem Deckglas 2 abgeschlossen ist. Im rückwärtigen Bereich des Gehäuses 1 ist eine erste Anzeige 3 angeordnet, welche analog ausgebildet ist und ein dunkel eingefärbtes Zifferblatt 4 sowie einen Zeiger 5 hat, der aus einem transparenten, organisch lichtemittierenden Material bestehen kann. Das Zifferblatt 4 ist transluzent ausgebildet und hat beispielsweise eine Transparenz von 40%. Deshalb kann hinter dem Zifferblatt 4 eine Durchlichtbeleuchtung 6 angeordnet werden, bei der es sich vorzugsweise um ein flächiges, organisch lichtemittierendes Bauteil (OLED) handelt.

Zwischen dem Zifferblatt 4 und dem Zeiger 5 ist eine zweite digitale Anzeige 7 angeordnet, die bevorzugt ebenfalls als organisch Licht emittierendes Bauteil ausgebildet ist. Diese zweite Anzeige 7 ist im nicht angesteuerten Zustand transparent und bei Ansteuerung für die Informationsdarstellung als selbstemittierendes Display mit Negativdarstellung ausgebildet. In diesem Fall weist die zweite Anzeige eine Ausnehmung für die Zeigerachse auf. Die Ausbildung einer Ausnehmung ist besonders vorteilhaft, wenn die OLED-Anzeige aus Kunststoff besteht. Statt den Zeiger 5 vor der zweiten Anzeige 7 vorzusehen, kann man die zweite Anzeige 7 auch vor dem Zeiger 5 auf der dem Betrachter zugewandten Seite anordnen. Dann kann man als erste Anzeige 3 ein völlig übliches Zeigerinstrument verwenden. Weiterhin kann dann auf ein Deckglas verzichtet werden, weil die zweite Anzeige 7 die Funktion des Deckglases mit übernimmt.

## Patentansprüche

1. Anzeigeeinheit, insbesondere für ein Kraftfahrzeug, welche ein erste analoge Anzeige mit einem Zifferblatt und einem Zeiger und eine zweite digitale Anzeige aufweist, die bei einer entsprechenden Ansteuerung für den Betrachter von demselben Blickpunkt aus wie das Zifferblatt sichtbar ist, wobei die zweite Anzeige (7) durch ein transparentes Display vor der Ebene des Zifferblattes (4) und parallel zu diesem auf der dem Betrachter zugewandten Seite angeordnet und für die Informationsdarstellung als selbstemittierendes Display ausgebildet ist, **dadurch gekennzeichnet, dass** die zweite Anzeige (7) ein Polymer aufweist, dass die zweite Anzeige (7) unmittelbar vor dem Zifferblatt (4) angeordnet ist, dass der Zeiger (5) aus einem transparenten, organisch Licht emittierenden Material besteht und sich vor der zweiten Anzeige (7) befindet.

2. Anzeigeeinheit nach Anspruch 1, **dadurch gekennzeichnet, dass** das Display als Display mit Negativdarstellung ausgebildet ist.

3. Anzeigeeinheit nach den Ansprüchen 1 oder 2, **dadurch gekennzeichnet, dass** die zweite Anzeige (7) eine organisch Licht emittierende Substanz aufweist.

4. Anzeigeeinheit nach zumindest einem der vorangehenden Ansprüche, **dadurch gekennzeichnet, dass** die Grafik des Zifferblattes (4) transluzent ist und hinter dem Zifferblatt (4) eine Durchlichtbeleuchtung (6) angeordnet ist.

5. Anzeigeeinheit nach Anspruch 4, **dadurch gekennzeichnet, dass** die Durchlichtbeleuchtung (6) durch ein flächiges, organisch lichtemittierendes Bauteil gebildet ist.

6. Anzeigeeinheit nach zumindest einem der vorangehenden Ansprüche, **dadurch gekennzeichnet, dass** das transluzente Zifferblatt (4) dunkel eingefärbt ist.

7. Anzeigeeinheit nach zumindest einem der vorangehenden Ansprüche, **dadurch gekennzeichnet, dass** die zweite Anzeige (7) das Zifferblatt (4) lediglich partiell überdeckt.

## Claims

1. Display unit, in particular for a motor vehicle, which has a first analogue display, with a dial face and an indicator, and a second digital display, the second display being visible, when appropriately activated, to the observer from the same viewing point as the dial face, with the second display (7) being arranged in the form of a transparent display in front of and parallel to the plane of the dial face (4) on the side facing the observer and designed as a self-emitting display for the display of information, **characterized in that** the second display (7) comprises a polymer, **in that** the second display (7) is arranged immediately in front of the dial face (4), **in that** the indicator (5) is made from a transparent, organic light-emitting material and is situated in front of the second display (7).

2. Display unit according to Claim 1, **characterized in that** the display is designed as a display with negative representation.

3. Display unit according to Claims 1 or 2, **characterized in that** the second display (7) comprises an organic light-emitting substance.

4. Display unit according to at least one of the preceding claims, **characterized in that** the graphics of the dial face (4) are translucent and a transmitted-light illumination (6) is arranged behind the dial face (4).

5. Display unit according to Claim 4, **characterized in that** the transmitted-light illumination (6) is formed by a planar, organic light-emitting component.

6. Display unit according to at least one of the preceding claims, **characterized in that** the translucent dial face (4) is darkly coloured.

7. Display unit according to at least one of the preceding claims, **characterized in that** the second display (7) only partly covers the dial face (4).

## Revendications

1. Unité d'affichage, notamment pour un véhicule automobile, qui comporte un premier affichage analogique avec un cadran et une aiguille et un deuxième affichage numérique, lequel, lors d'une excitation correspondante, est, pour l'observateur, visible à partir du même point de vue que le cadran, où le deuxième affichage (7) est constitué par un écran transparent disposé devant le plan du cadran (4) et parallèlement à celui-ci sur le côté tourné vers l'observateur et conçu pour la représentation d'informations sous la forme d'écran à auto-émission, **caractérisée par le fait que** le deuxième affichage (7) a un polymère, que le deuxième affichage (7) est placé directement devant le cadran (4), que l'aiguille (5) est en matière transparente émettant de la lumière d'une façon organique et qu'elle se trouve devant le deuxième affichage (7).

2. Unité d'affichage selon la revendication 1, **caractérisée par le fait que** l'écran est conçu comme écran à représentation en négatif.

3. Unité d'affichage selon les revendications 1 ou 2, **caractérisée par le fait que** le deuxième affichage (7) comporte une substance émettant de la lumière d'une façon organique.

4. Unité d'affichage selon au moins l'une des revendications précédentes, **caractérisée par le fait que** la graphique du cadran (4) est translucide et qu'un éclairage par transparence (6) est placé derrière le cadran (4).

5. Unité d'affichage selon la revendication 4, **caractérisée par le fait que** l'éclairage par transparence (6) est formé par un composant en nappe émettant de la lumière d'une façon organique.

6. Unité d'affichage selon au moins l'une des revendications précédentes, **caractérisée par le fait que** le cadran translucide (4) est coloré en teinte sombre.

7. Unité d'affichage selon au moins l'une des revendications précédentes, **caractérisée par le fait que** le deuxième affichage (7) ne recouvre que partiellement le cadran (4).
